# FASCICULE DE BREVET EUROPEEN

(11) **EP 3 242 581 B1**
(45) Date de publication et mention de la délivrance du brevet: **19.12.2018**
(21) Numéro de dépôt: 16701688.0
(22) Date de dépôt: 05.01.2016
(51) Int. Cl.: A47J 37/06

(54) **APPAREIL DE CUISSON À PANNEAU AMORTI**
KOCHVORRICHTUNG MIT GEPOLSTERTEM PANEEL
COOKING APPARATUS WITH CUSHIONED PANEL

(30) Priorité: 06.01.2015 FR 1550068
(43) Date de publication de la demande: 15.11.2017
(73) Titulaire: SEB S.A., 69130 Ecully (FR)
(72) Inventeur: VOLATIER, Sébastien, 21000 Dijon (FR); GOYON, Annabelle, 21120 Marcilly-sur-tille (FR)
(74) Mandataire: Soares, Luis Filipe
(86) Numéro de dépôt international: PCT/FR2016/050008
(87) Numéro de publication internationale: WO 2016/110639

(56) Documents cités:
- FR-A1- 2 866 539
- US-A- 3 776 124
- US-A- 5 341 727

## Description

La présente invention concerne un appareil électroménager de cuisson comportant deux panneaux articulés entre eux, comme, par exemple, un gaufrier, un gril viande ou un gril croque-monsieur.

On connaît un appareil électroménager du type comportant deux structures articulées entre elles par une charnière entre une position ouverte et une position fermée et entraînées à une certaine vitesse vers leur position ouverte par un organe d'entraînement.

Le brevet FR2866539 décrit un tel appareil électroménager.

Toutefois, les appareils électroménagers de ce type ne comprennent pas de système qui permette de limiter le poids d'une des structures. Au contraire le système décrit tend à relever au maximum une des deux structures qui est arrêtée en butée dans sa montée.

On connaît également des appareils électroménagers comportant deux structures articulées entre elles par une charnière entre une position ouverte et une position fermée et qui ne comprennent pas d'organe d'entraînement. Dans ce cas les aliments positionnés entre ces deux structures peuvent être écrasés par le poids de la structure supérieure s'ils sont trop fragiles.

Le document US3776124 divulgue un appareil de cuisson comprenant :
- une première structure comportant une plaque chauffante pour cuire un aliment; et,
- une deuxième structure comportant une plaque chauffante pour cuire un aliment; et,
- un bâti sur lequel repose la deuxième structure et, la première structure et la deuxième structure sont articulées entre elles par au moins une charnière entre une position ouverte ou une position fermée ou encore une position de cuisson, qui est une position intermédiaire entre la position ouverte et la position fermée, ladite charnière comprend au moins un arbre solidaire du bâti,
- un amortisseur du poids de la première structure lorsque celui-ci est dans la position de cuisson ou dans la position fermée et dans la position de cuisson l'amortisseur du poids de la première structure étant composé d'au moins un moyen élastique qui permet de garder la première structure en contact avec le ou les aliments à cuire.

La charnière permet que les deux structures pivotent entre elles.

Grâce à cet amortisseur le poids de la première structure peut être réduit lors de la cuisson d'aliments fragiles et ainsi limiter l'écrasement des aliments fragiles tout en gardant un contact des aliments avec la première structure de manière à conserver une cuisson des aliments des deux côtés.

Le fait d'avoir un amortisseur composé de moyen élastique contribue à avoir un amortissement fluide et linéaire de la première structure.

Cependant, l'amortisseur du poids de la première structure présente un fort encombrement.

Un but de la présente invention est de répondre aux inconvénients de l'art antérieur mentionnés ci-dessus et en particulier de proposer un appareil électroménager dont le but est d'avoir une fonction qui permette de limiter l'écrasement des aliments fragiles pendant la cuisson, écrasement provoqué par le poids de la structure positionnée au-dessus des aliments, tout en limitant l'encombrement de l'amortisseur de poids.

Selon une caractéristique de l'invention, le moyen élastique est placé sur le au moins un arbre.

Le fait de placer le ou les moyens élastiques sur l'arbre permet d'avoir un amortisseur compact et donc un appareil de cuisson qui permet de limiter l'écrasement des aliments fragiles qui soit également compact. En plus de la compacité cela permet d'avoir un amortisseur qui soit simple à réaliser. En outre un tel système est peu couteux et facilement intégrable.

Selon un mode de réalisation, le diamètre du au moins un moyen élastique est supérieur au diamètre du au moins un arbre. De cette manière les frottements sont évités entre le ou les moyens élastiques et l'arbre.

Selon un mode de réalisation, le au moins un moyen élastique comprend un premier point de fixation qui est solidaire du au moins un arbre et un second point de fixation qui est solidaire du bâti de l'appareil de cuisson. De cette manière le moyen élastique travaille en amortissement.

Selon un premier mode de réalisation de l'amortisseur, celui-ci est composé d'au moins un ressort de torsion. Un intérêt d'avoir un moyen élastique composé d'un ressort de torsion est d'avoir un moyen élastique peu couteux et facilement intégrable sur un arbre.

Selon un second mode de réalisation de l'amortisseur, celui-ci est composé d'au moins un ressort de compression. Le ressort de compression permet de s'affranchir d'un positionnement sur l'arbre pour n'être placé que dans l'appareil de cuisson.

Selon un mode de réalisation, l'effet de l'amortisseur est maximal en position fermée et nul dans une position supérieure.

Selon un mode de réalisation, l'amortisseur compense entre 40% et 80% du poids de la première structure et préférentiellement 50% dans la position de cuisson. De cette manière, et en position de cuisson, les aliments fragiles sont toujours en contact avec la première structure mais sans être écrasés et le temps de cuisson n'est pas impacté.

Selon un mode de réalisation, la première structure est montée sur la au moins une charnière au moyen d'au moins un bras latéral mobile par rapport au moins à la deuxième structure. L'intérêt d'avoir au moins un bras latéral mobile par rapport au moins à la première structure permet d'avoir la première et la seconde structure qui peuvent rester parallèles entre elles lors d'un écartement de la première et de la seconde structure.

Selon un mode de réalisation, l'appareil de cuisson comprend un balancier relié aux au moins un arbre et qui coopère avec un moyen de mesure de l'angle de pivotement du balancier pour estimer l'épaisseur de l'aliment.

D'autres avantages et particularités de la présente invention apparaîtront dans la description du mode de réalisation donné à titre d'exemple non limitatif et illustré par les dessins mis en annexe.
- La figure 1 est une vue de côté d'un appareil électroménager conforme à la présente invention en position ouverte ;
- La figure 2 est une vue de côté d'un appareil électroménager conforme à la présente invention en position de cuisson ;
- La figure 3 est une vue en perspective arrière d'un appareil électroménager conforme à la présente invention ;
- La figure 4 est une vue en perspective arrière éclatée de la charnière de l'appareil.

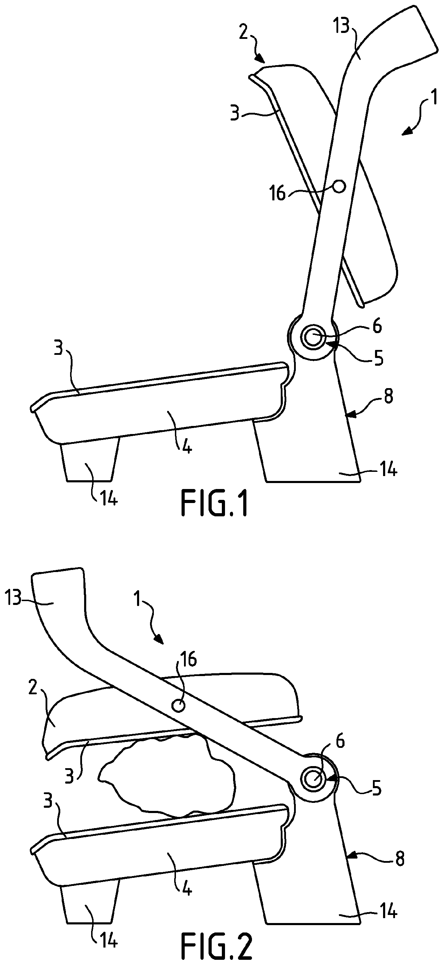

Classiquement comme on peut le voir à la figure 1, un appareil électroménager de cuisson 1 est du type de celui décrit dans la demande de brevet FR1255600. Il comporte une première structure 2 et on prévoit que l'appareil électroménager 1 soit pourvu d'une deuxième structure 4. La première structure 2 est positionnée au dessus de la deuxième structure 4. La première structure 2 est mobile par rapport à la deuxième structure 4 pour produire un mouvement d'écartement de manière à pouvoir placer des aliments à cuire entre ces deux structures 2,4.

Chaque structure 2,4 forme un sous-ensemble de cuisson et comprend une coque formant le corps du sous-ensemble, une plaque chauffante 3 qui est portée par la coque et qui est adaptée à cuire un aliment, et un organe de chauffe (une résistance électrique) qui est disposée entre la coque et la plaque chauffante 3 et qui est adapté à transmettre l'énergie thermique à la plaque chauffante 3. Éventuellement, chaque structure 2, 4 comprend un réflecteur thermique qui est disposé entre la résistance électrique et la coque de façon à réduire l'énergie thermique transmise à cette dernière.

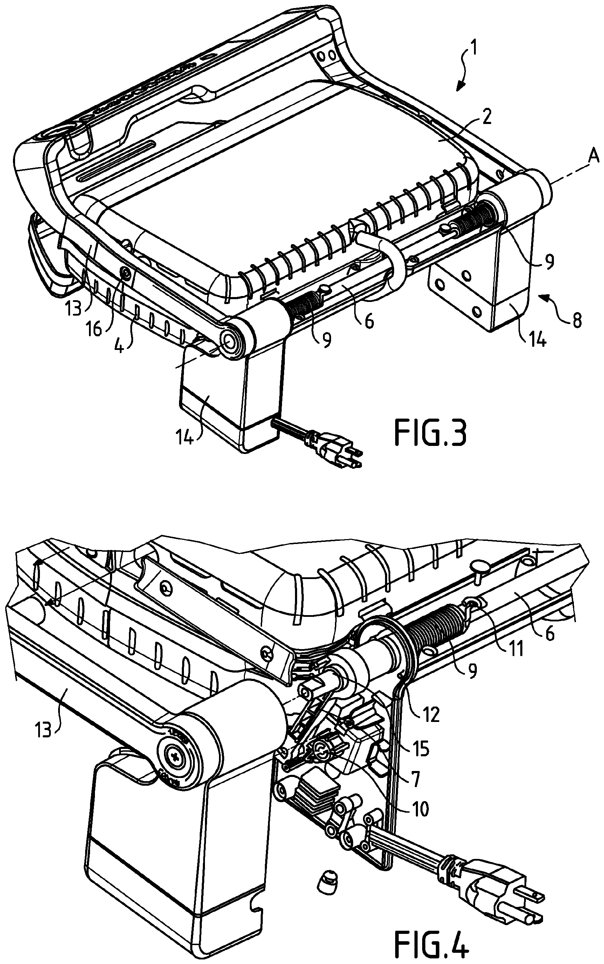

Les deux structures 2,4 sont articulées entre elles par une charnière 5 entre une position fermée, comme visible aux figures 3 et 4, dans laquelle la première structure 2 recouvre la deuxième structure 4, une position ouverte, comme visible à la figure 1, dans laquelle la plaque chauffante 3 de la deuxième structure 4 est accessible de façon à pouvoir y placer l'aliment à cuire et à l'en retirer, et une position de cuisson, comme visible à la figure 2, dans laquelle un aliment est disposé entre les deux structures 2, 4 et les deux structures 2, 4 sont en contact avec l'aliment dans cette position de cuisson.

La deuxième et la première structures 4, 2 sont adaptées à cuire contre elles, par conduction, l'aliment ou les aliments disposés entre les plaques chauffantes 3. Plus précisément, l'aliment est cuit contre les deux plaques chauffantes 3. L'aliment ou les aliments peuvent être de la viande, du poisson, des légumes, ou autres.

L'appareil électroménager 1 comprend un bâti 8 sur lequel repose la deuxième structure 4. Eventuellement ce bâti 8 est composé d'un ou plusieurs pieds 14 positionnés à l'avant ou à l'arrière de l'appareil électroménager 1, comme c'est le cas dans le cadre de l'invention, où on a au moins deux pieds 14 positionnés à l'arrière de l'appareil électroménager 1 et deux pieds 14 positionnés à l'avant.

Comme visible aux figures 3 et 4 qui détaillent la construction de la charnière 5, la charnière 5 est formée par un arbre 6 qui traverse les deux pieds 14 arrières de l'appareil électroménager 1, de façon à constituer un point de pivot. L'arbre 6 peut pivoter selon un axe de rotation A. A cet arbre 6 sont reliés deux bras latéraux 13. Les deux bras latéraux 13 soutiennent la première structure 2 qui est montée pivotante entre les deux bras latéraux 13 par l'intermédiaire d'un point de pivot 16.

Dans le cadre de l'invention, l'arbre 6 relie les deux pieds 14 arrières et dans une variante on peut également avoir plusieurs arbres indépendants et notamment un arbre 6 situé sur chaque pied arrière de l'appareil électroménager 1.

Afin de limiter l'écrasement des aliments on dispose au niveau de la charnière 5 un système de compensation (également appelé amortisseur) du poids de la première structure 2 et qui permet de compenser entre 40% et 80% du poids de la première structure 2 ce qui évite l'écrasement des aliments fragiles lorsque l'appareil électroménager 1 est en position de cuisson, tout en assurant le contact avec les aliments.

Comme visible à la figure 3, l'amortisseur de poids est composé de deux moyens élastiques. Les moyens élastiques sont placés sur l'arbre 6 de la charnière 5.

Ces moyens élastiques sont des ressorts de torsion 9 comme visible aux figures 3 et 4. Dans ce cas là, le diamètre des ressorts de torsion 9 est supérieur au diamètre de l'arbre 6 de la charnière 5. Ceci permet entre autre d'éviter les frottements. Les ressorts de torsion 9 comprennent deux points de fixation. Un premier point de fixation 11 est solidaire de l'arbre 6 de la charnière 5. Un second point de fixation 12 est solidaire du bâti 8 (ou du pied 14) de l'appareil électroménager 1.

Il est possible de réaliser l'amortissement avec un seul ressort à torsion relié à un des deux pieds de l'appareil électroménager 1.

Dans une autre variante des moyens élastiques, ceux-ci sont composés de ressorts de compression, intégrés cette fois ci directement dans le pied de l'appareil électroménager 1.

Dans l'une ou l'autre variante des moyens élastiques, l'effet de l'amortisseur est maximal en position fermée, c'est-à dire lorsque les deux plaques de cuisson sont en contact, et nul dans une position supérieure, c'est-à dire lorsque la première structure (ou les bras latéraux 13 retenant celle-ci) et la seconde structure 2,4 font un angle supérieur à 90°.

Dans une réalisation préférentielle, les moyens élastiques sont calculés pour compenser approximativement 50% du poids de la première structure 2. Dans le cas où la première structure 2 pèse approximativement 1,3 kg, au moins deux ressorts de 650 Newtons chacun sont nécessaires.

Comme visible à la figure 4, l'appareil électroménager 1 comprend également un dispositif de mesure qui permet de mesurer l'épaisseur de l'aliment placé dans l'appareil électroménager 1. Celui-ci est décrit dans la demande de brevet FR1255600 et il comprend un moyen de mesure 10 relié à un balancier 7 qui est apte à pivoter dans l'appareil électroménager 1 par l'intermédiaire d'une extrémité 15 liée à l'arbre 6.

Le balancier 7 peut être lié rigidement à l'arbre 6, en étant par exemple monté serré autour de lui. De la sorte, lors du pivotement ou de la rotation de l'arbre 6, celui-ci entraîne également en rotation le balancier 7. On peut aussi prévoir que le balancier 7 soit monté sur l'arbre 6 avec un jeu suffisant pour permettre la rotation ou le pivotement du balancier. A la différence de la variante avec le balancier 7 monté rigidement, lors de la rotation de l'arbre 6, le balancier pivote via d'autres moyens liés à l'arbre 6.

On comprendra que diverses modifications et/ou améliorations évidentes pour l'homme du métier peuvent être apportées au mode de réalisation de l'invention décrit dans la présente description sans sortir du cadre de l'invention définie par les revendications annexées.

## Revendications

1. Appareil (1) de cuisson comprenant :
- une première structure (2) comportant une plaque chauffante (3) pour cuire un aliment; et,
- une deuxième structure (4) comportant une plaque chauffante (3) pour cuire un aliment; et,
- un bâti (8) sur lequel repose la deuxième structure (4) et, la première structure (2) et la deuxième structure (4) sont articulées entre elles par au moins une charnière (5) entre une position ouverte ou une position fermée ou encore une position de cuisson, qui est une position intermédiaire entre la position ouverte et la position fermée et, ladite charnière (5) comprend au moins un arbre (6) solidaire du bâti (8),
- un amortisseur du poids de la première structure (2) lorsque celui-ci est dans la position de cuisson ou dans la position fermée, l'amortisseur du poids de la première structure (2) étant composé d'au moins un moyen élastique qui permet de garder la première structure (2) en contact avec le ou les aliments à cuire, ledit appareil étant **caractérisé en ce que** ledit moyen élastique est placé sur le au moins un arbre (6).

2. Appareil (1) de cuisson selon la revendication 1, **caractérisé en ce que** le diamètre du au moins un moyen élastique est supérieur au diamètre du au moins un arbre (6) de manière à éviter les frottements.

3. Appareil (1) de cuisson selon l'une des revendications 1 ou 2, **caractérisé en ce que** le au moins un moyen élastique comprend un premier point de fixation (11) qui est solidaire du au moins un arbre (6) et un second point de fixation (12) qui est solidaire du bâti (8) de l'appareil (1) de cuisson.

4. Appareil (1) de cuisson selon l'une des revendications 1 ou 3, **caractérisé en ce que** l'amortisseur est composé d'au moins un ressort (9) de torsion.

5. Appareil (1) de cuisson selon l'une des revendications 1 ou 3, **caractérisé en ce que** l'amortisseur est composé d'au moins un ressort de compression.

6. Appareil (1) de cuisson selon l'une des revendications précédentes, **caractérisé en ce que** l'effet de l'amortisseur est maximal en position fermée et nul dans une position supérieure.

7. Appareil (1) de cuisson selon l'une des revendications précédentes, **caractérisé en ce que** l'amortisseur compense entre 40% et 80% du poids de la première structure (2) et préférentiellement 50% dans la position de cuisson.

8. Appareil (1) de cuisson selon l'une des revendications précédentes, **caractérisé en ce que** la première structure (2) est montée sur la au moins une charnière (5) au moyen d'au moins un bras (13) latéral mobile par rapport au moins à la deuxième structure (4).

9. Appareil (1) de cuisson selon la revendication 8, **caractérisé en ce qu'**il comprend un balancier (7) relié aux au moins un arbre (6) et qui coopère avec un moyen de mesure (10) de l'angle de pivotement du balancier (7) pour estimer l'épaisseur de l'aliment.

## Patentansprüche

1. Kochgerät (1), umfassend:
- eine erste Struktur (2), die eine Heizplatte (3) umfasst, um ein Nahrungsmittel zu kochen; und
- eine zweite Struktur (4), die eine Heizplatte (3) umfasst, um ein Nahrungsmittel zu kochen; und
- einen Unterbau (8), auf dem die zweite Struktur (4) ruht, und die erste Struktur (2) und die zweite Struktur (4) über mindestens ein Scharnier (5) gelenkig miteinander verbunden sind zwischen einer offenen Stellung oder einer geschlossenen Stellung oder auch einer Kochstellung, welche eine Zwischenstellung zwischen der offenen Stellung und der geschlossenen Stellung ist, und das Scharnier (5) mindestens eine Welle (6) umfasst, die fest mit dem Unterbau (8) verbunden ist,
- einen Dämpfer des Gewichts der ersten Struktur (2), wenn sich dieselbe in der Kochstellung oder in der geschlossenen Stellung befindet, wobei der Dämpfer des Gewichts der ersten Struktur (2) aus mindestens einem elastischen Mittel besteht, das es ermöglicht, die erste Struktur (2) mit dem oder den zu kochenden Nahrungsmitteln in Kontakt zu halten, wobei das Gerät **dadurch gekennzeichnet ist, dass** das elastische Mittel an der mindestens einen Welle (6) platziert ist.

2. Kochgerät (1) nach Anspruch 1, **dadurch gekennzeichnet, dass** der Durchmesser des mindestens einen elastischen Mittels größer ist als der Durchmesser der mindestens einen Welle (6), um Reibungen zu verhindern.

3. Kochgerät (1) nach einem der Ansprüche 1 oder 2, **dadurch gekennzeichnet, dass** das mindestens eine elastische Mittel einen ersten Befestigungspunkt (11) umfasst, der fest mit der mindestens einen Welle (6) verbunden ist, und einen zweiten Befestigungspunkt (12), der fest mit dem Unterbau (8) des Kochgeräts (1) verbunden ist.

4. Kochgerät (1) nach einem der Ansprüche 1 oder 3, **dadurch gekennzeichnet, dass** der Dämpfer aus mindestens einer Torsionsfeder (9) besteht.

5. Kochgerät (1) nach einem der Ansprüche 1 oder 3, **dadurch gekennzeichnet, dass** der Dämpfer aus mindestens einer Kompressionsfeder besteht.

6. Kochgerät (1) nach einem der vorstehenden Ansprüche, **dadurch gekennzeichnet, dass** die Wirkung des Dämpfers in geschlossener Stellung maximal ist, und in einer oberen Stellung Null ist.

7. Kochgerät (1) nach einem der vorstehenden Ansprüche, **dadurch gekennzeichnet, dass** der Dämpfer in der Kochstellung zwischen 40 % und 80 %, und vorzugsweise 50 % des Gewichts der ersten Struktur (2) kompensiert.

8. Kochgerät (1) nach einem der vorstehenden Ansprüche, **dadurch gekennzeichnet, dass** die erste Struktur (2) mittels mindestens eines Seitenarms (13), der mindestens in Bezug auf die zweite Struktur (4) beweglich ist, an dem mindestens einen Scharnier (5) montiert ist.

9. Kochgerät (1) nach Anspruch 8, **dadurch gekennzeichnet, dass** es ein Pendel (7) umfasst, das mit der mindestens einen Welle (6) verbunden ist, und das mit einem Mittel zum Messen (10) des Schwenkwinkels des Pendels (7) zusammenwirkt, um die Dicke des Nahrungsmittels zu schätzen.

## Claims

1. A cooking appliance (1) comprising:
- a first structure (2) including a hotplate (3) for cooking food;
- a second structure (4) including a hotplate (3) for cooking food; and
- a frame (8) on which the second structure (4) rests, the first structure (2) and the second structure (4) being hinged together via at least one hinge (5) to go between an open position, a closed position, or a cooking position, which is an intermediate position between the open position and the closed position, and said hinge (5) including at least one shaft (6) secured to the frame (8); and
- a damper for cushioning or compensating for the weight of the first structure (2) when said first structure is in the cooking position or in the closed position, the damper for cushioning the weight of the first structure (2) being composed of at least one resilient means that makes it possible to keep the first structure (2) in contact with the food to be cooked, said cooking appliance being **characterized in that** said resilient means is placed on the at least one shaft (6).

2. A cooking appliance (1) according to claim 1, **characterized in that** the diameter of the at least one resilient means is greater than the diameter of the at least one shaft (6) to avoid friction.

3. A cooking appliance (1) according to claim 1 or claim 2, **characterized in that** the at least one resilient means includes an attachment point (11) that is secured to or integral with the at least one shaft (6) and a second attachment point (12) that is secured to or integral with the frame (8) of the cooking appliance (1).

4. A cooking appliance (1) according to claim 1 or claim 3, **characterized in that** the damper is composed of at least one torsion spring (9).

5. A cooking appliance (1) according to claim 1 or claim 3, **characterized in that** the damper is composed of at least one compression spring.

6. A cooking appliance (1) according to any preceding claim, **characterized in that** the effect of the damper is at its maximum in the closed position and is zero in an upper position.

7. A cooking appliance (1) according to any preceding claim, **characterized in that** the damper compensates for in the range 40 % of the weight of the first structure (2) to 80 % of said weight of said first structure, and preferably for 50 % of said weight of said first structure in the cooking position.

8. A cooking appliance (1) according to any preceding claim, said cooking appliance being **characterized in that** the first structure (2) is mounted on the at least one hinge (5) by means of at least one side arm (13) that is mounted to move relative at least to the second structure (4).

9. A cooking appliance (1) according to claim 8, **characterized in that** it further comprises a lever arm (7) that is connected to at least one shaft (6) and that co-operates with a measurement means (10) for measuring the pivot angle through which the lever arm (7) pivots so as to estimate the thickness of the food.
